# EUROPEAN PATENT SPECIFICATION

(11) **EP 3 683 064 B1**
(45) Date of publication and mention of the grant of the patent: **03.08.2022**
(21) Application number: 19152123.6
(22) Date of filing: 16.01.2019
(51) Int. Cl.: B41J 3/46

(54) **A METHOD FOR USING A PRINT MEDIUM FOR A PRINT JOB IN A PRINT SYSTEM**
VERFAHREN ZUR VERWENDUNG EINES DRUCKMEDIUMS FÜR EINEN DRUCKAUFTRAG IN EINEM DRUCKSYSTEM
PROCÉDÉ D'UTILISATION D'UN MÉDIUM D'IMPRESSION POUR UNE TÂCHE D'IMPRESSION DANS UN SYSTÈME D'IMPRESSION

(43) Date of publication of application: 22.07.2020
(73) Proprietor: Canon Production Printing Holding B.V., 5914 HH Venlo (NL)
(72) Inventor: VAN VLIEMBERGEN, Eduardus J. W., 5914 CA Venlo (NL)
(74) Representative: Canon Production Printing IP Department

(56) References cited:
- EP-A1- 3 162 579
- EP-A2- 0 978 996
- US-A1- 2018 281 487
- US-B1- 6 351 320
- US-B1- 7 050 196

## Description

### FIELD OF THE INVENTION

The present invention relates to a method for profiling a print medium for use in a printing system, the printing system configured to print on profiled print media and comprising a print controller for controlling print system parameters to be applied when printing on the print medium.

A print medium is defined to be a material for receiving marking material deposited by the printing system. The print medium may be paper, plastic, wood, textile, glass, etc.

When an end user runs into problems during printing on a print medium, a cause may be that wrong print system settings are used. In order to make optimal prints on the print medium, print media profiles are created. A print media profile is a set of print system parameters that define the settings on the print system for a specific print media/printer/RIP combination. By providing a customers with a profile for the media to be used, a trial-and-error process for the customer is eliminated and it is confidently known that the print media works with the print system.

### BACKGROUND OF THE INVENTION

To run a certain print medium on a print system, the print system needs to use prescribed print system parameters to print on this print medium. For a cut sheet inkjet printer, important values are a total area coverage (TAC), i.e. an amount of marking material that can be placed on the print medium, an amount of primer ink, a temperature of a print surface, a distance from the print head to the print medium, a print speed along the paper path and a colour profile to be applied. A TAC that is too high for the print medium may result in marking material deposition inside the print engine as pollution or smearing and when printed for a longer time will result in damage to the print engine. Other print system parameters influence the print quality and the amount of sheets that are rejected by the print system due to deformation of the sheets.

As determining values for print system parameters that result in optimal print quality and runnability currently requires printing significant amount of print media, time, and specialized hardware, a user of the print system can currently choose print media that have been pre-tested by a supplier of the print media and from which media definitions have been made available.

For example, EP 3162579 describes a method of generating a stack of printed sheets via a test job and checking whether or not unwanted marking material is deposited on the stack.

An object of the present invention is to provide a method for users that want to use their own print medium for a print job with print job specifications. Another object is to provide a method to find ranges of print system parameters with respect to the print medium that are adequate for the print job and will not result in damage to the print engine. Another object of the present invention is a print system in which the method is implemented.

### SUMMARY OF THE INVENTION

For this purpose, the print controller comprises a two-dimensional media print mode table of media print modes for print media to be printed upon, wherein each media print mode is uniquely determined by a uniquely determined combination of at least a first print system parameter of print speed of the printing system and a second print system parameter of coverage of the marking material and comprises an indication item of a suitability of the print medium when said media print mode is applied, the indication item indicating a good, bad or conditional suitability, and the printing system comprises a user interface for displaying the two-dimensional media print mode table for a print medium, wherein the method comprises the steps of
a) receiving a print job for printing on a first print medium,
b) retrieving the two-dimensional media print mode table for the first print medium,
c) investigating if media print modes in the two-dimensional media print mode table for the first print medium which have a conditional suitability are suitable for printing the print job,
d) modifying the two-dimensional media print mode table for the first print medium based on the investigation in step c), and
e) the user interface displaying the modified two-dimensional media print mode table for the print medium.

For the first print medium used in the print job a complete set of media print modes is available and also conditional results from tests with some of the media print modes may be indicated as limitations.

The user is able to select a media print mode that fits best with his print job. Even media print modes that may be used for the print job with limitations are communicated via the user interface of the printing system. These limitations may not apply to the print job which will be a result of the investigation in step c).

A conditional suitability is meant to be that a test result beforehand executed for the print medium is good under specific conditions. The specific conditions may depend on the kind of the print job. The specific conditions may be restrictions or limitations to the number of sheets of the print job, the sheet content of the print job being text, drawings of photographical images, a distance of the content from an edge of a sheet, etc. Other examples of restrictions and limitations are elucidated hereinafter in the detailed description of the embodiments. When investigating the media print modes in the two-dimensional media print mode table for the first print medium which have a conditional suitability, the conditions of the conditional suitability are checked with respect to the print job, for example by taking specifications of the print job or content of the print job into account.

The media print mode table is part of the print medium profile. The term media print mode may hereinafter be abbreviated as "MPM".

According to an embodiment the step of modifying the two-dimensional media print mode table for the first print medium comprises the step of replacing an indication item in the two-dimensional media print mode table indicating a conditional suitability, by a modified indication item indicating a good or bad suitability according to the investigation in the step c).

According to an embodiment the step of modifying the two-dimensional media print mode table for the first print medium comprises the step of leaving out a media print mode from the two-dimensional media print mode table for the print medium when the indication item indicates a bad suitability for the print job.

According to an embodiment the step of the user interface displaying the modified two-dimensional media print mode table for the print medium comprises the sub-step of reducing the media print modes intended to be displayed to a predefined limited set of preferred media print modes. The set of preferred media print modes may comprise a default print mode, a print mode for a high speed and a print mode for a high gamut.

According to an embodiment the method comprises the step of replacing an indication item in the two-dimensional media print mode table which indicates a good or conditional suitability by a modified indication item which indicates a bad suitability according to the authority of the operator or owner of the print job. For example, if the user which is logged in is not a key operator, the selectable media print modes may be restricted to a default media print mode, a high speed media print mode and/or a high gamut media print mode.

The present invention also relates to a printing system configured to profile print media and comprising a print controller for controlling print system parameters to be applied when printing a print job on the print medium, the print controller comprising in storage a two-dimensional media print mode table of media print modes for print media to be printed upon, wherein each media print mode is uniquely determined by a uniquely determined combination of at least a first print system parameter of print speed of the printing system and a second print system parameter of coverage of the marking material and comprises an indication item of a suitability of the print medium when said media print mode is applied, the indication item indicating a good, bad or conditional suitability, and a user interface for displaying the two-dimensional media print mode table for a print medium, wherein the print controller is configured to execute the method according to the present invention.

The present invention also relates to a non-transitory recording medium comprising computer executable program code configured to instruct a computer to perform a method according to the present invention.

### BRIEF DESCRIPTION OF THE DRAWINGS

The invention will now be explained further with reference to the Examples indicated below.
FIG. 1 shows the general arrangement of the printing system according to the present invention.
FIG. 2 shows a flow diagram of an embodiment of the method according to the present invention.
FIG. 3 shows the two-dimensional media print mode table according to the invention provided with indications of the suitability of the respective media print modes.
FIG. 4 shows the two-dimensional media print mode table which is modified according to the method of the present invention.

### DETAILED DESCRIPTION OF EMBODIMENTS

The present invention will now be described with reference to the accompanying drawings, wherein the same or similar elements are identified with the same reference numerals throughout the several views.

The embodiments are explained by taking in the examples a printing system comprising a print head or print assembly, like an inkjet printing system or an electro-photographical printing system. In principal a printing system in which any kind of print medium, any kind of marking material, and, if needed, any kind of finishing material is to be loaded and the kind of marking material is to be printed on the kind of print medium may be configured to use the methods according to the embodiments of the present invention.

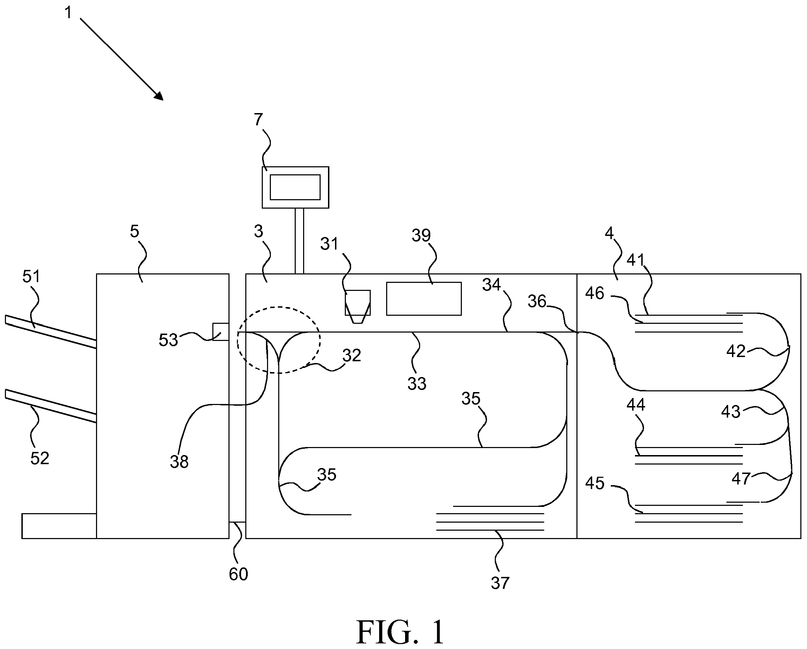

FIG. 1 shows schematically an exemplary printing system 1 in which the method according to the invention is applicable. The printing system 1 comprises an output section 5, a print engine and control section 3 possibly containing one or more additional input holders 37, a local user interface 7 and an input section 4.

The output section 5, the print engine and control section 3 and the input section 4 may comprise sensors to sense the circumstances of the sheets when transported along a paper path from the input section 4 to the output section 5 which paper path will be elucidated hereinafter. The sensors are calibrated beforehand in order to assure that all measurement sensors involved in the method according to the present invention are calibrated and correctly operating, and to take sensor aging, pollution, environmental conditions like humidity and temperature into account when reading the sensor measurements.

The output section 5 comprises two supply material output holders 51, 52 for holding printed print medium. The printed print medium is transported from the print engine and control section 3 via an inlet 53 to the output section 5. The output section 5 is digitally connected by means of a cable 60 to the print engine and control section 3 for bidirectional data signal transfer. Other supply material output holders may be envisioned, for example a supply material output holder for residuals of ink or toner or a supply material output holder for waste paper in case of drilling actions, cutting actions or perforating actions. Depletions of such a supply material output holder may be scheduled according to the method of the invention.

The print engine and control section 3 comprises a print engine and a print controller 39 for controlling the printing process. The print controller 39 is a computer or server or a workstation, connected to the print engine and connected to the digital environment of the printing system, for example a network for transmitting a submitted print job to the printing system. The print controller 39 also comprises in storage a media catalogue software system (not shown) for print media which are profiled for use by the printing system 1 according to the method of the present invention. The print controller 39 also comprises a receiving section (not shown) for receiving print jobs submitted to the printing system 1.

The print engine comprises a print head or print assembly 31 for ejecting or fixing marking material to the print medium and a paper path 34, 32, 35 for transporting the print medium from an entry point 36 of the print engine and control section 3 to the inlet 53 of the output section 5. Along the paper path 34, 32, 35 sensors may be applied. The print head or print assembly 31 is positioned near the paper path section 34. While a print medium is transported along the paper path section 34, the print medium receives the marking material from the print head or print assembly 31. A next paper path section 32 is a flip unit for selecting a different subsequent paper path for simplex or duplex printing of the print medium. The flip unit 32 may be also used to flip a printed sheet of print medium after printing in simplex mode before the printed sheet leaves the print engine and control section 3 via a curved section 38 of the flip unit 32 and via the inlet 53 to the output section 5. In another embodiment of the printing system the curved section 38 of the flip unit 32 is not present and the turning of a simplex page has to be done via another paper path section 35 and leads to productivity loss. In another embodiment of the printing system an additional turning station - partly to replace the curved section 38 of the flip unit 32 - is configured outside the print engine and control

section 3 between the print engine and control section 3 and the output section 5.

When the print medium has to be printed in a simplex mode, the print medium may directly by transported via the flip unit 32 to the inlet 53 of the output section 5. When the print medium has to be printed in a duplex mode, the print medium is transported via the flip unit 32 to the other paper path section 35 for turning the print medium in order to switch front side and back side of the sheets. The sheets are then transported to the paper path section 34 again for printing on the rear side of the sheets by means of the print head or print assembly 31.

The print engine and control section 3 also comprises an additional input holder 37 for holding print medium. Print medium may have to be input in the additional input holder 37 in another orientation than an input orientation for the print medium holders 44, 45, 46.

The input section 4 comprises a plurality of print medium input holders 44, 45, 46 for holding the print medium before transporting the sheets of the print medium to the print engine and control section 3. Sheets of the print medium are guided from the print medium input holders 44, 45, 46 by guiding means 42, 43, 47 to an outlet 36 for entrance in the print engine and control section 3. Sheets of the print medium are now guided from the print medium input holders 44, 45, 46 to the right side of the print medium input holders 44, 45, 46, but other configurations of the print medium holders may be envisioned for at least partly guiding the sheets to the left side. For these other configurations a suitable instruction for face up or face down loading of the print medium in the respective print medium input holder will be generated by the printer controller.

FIG. 1 shows a plurality of print medium input holders. The invention, however, also applies to a printing system comprising only one print medium input holder. FIG. 1 shows a plurality of print medium output holders. The invention, however, also applies to a printing system comprising only one print medium output holder.

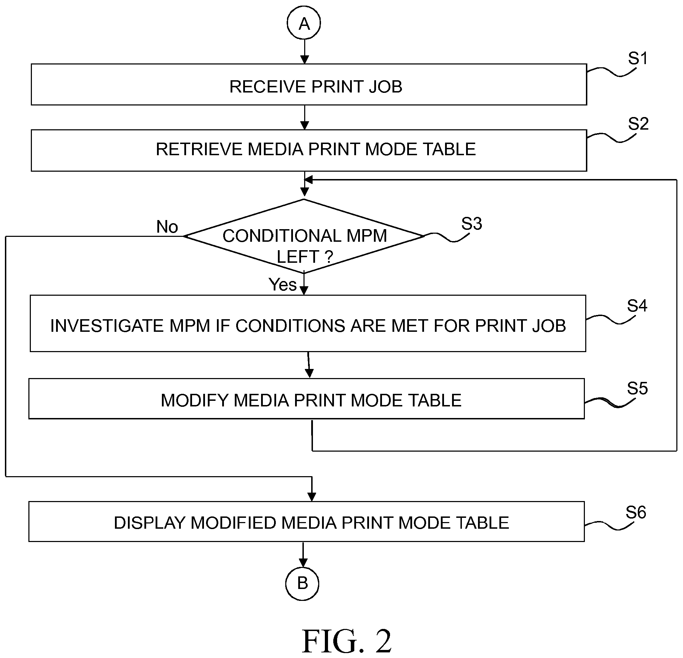

FIG. 2 shows a flow diagram of the method according to the present invention. The method starts in a starting point A and leads to a first step S1.

In the first step S1 a print job for printing on a first print medium is received in the receiving section of the printing system 1. From the print job specifications it is derived on which first print medium the print job is intended to be printed.

In a second step S2 the two-dimensional media print mode table for the first print medium is retrieved from the storage of the print controller.

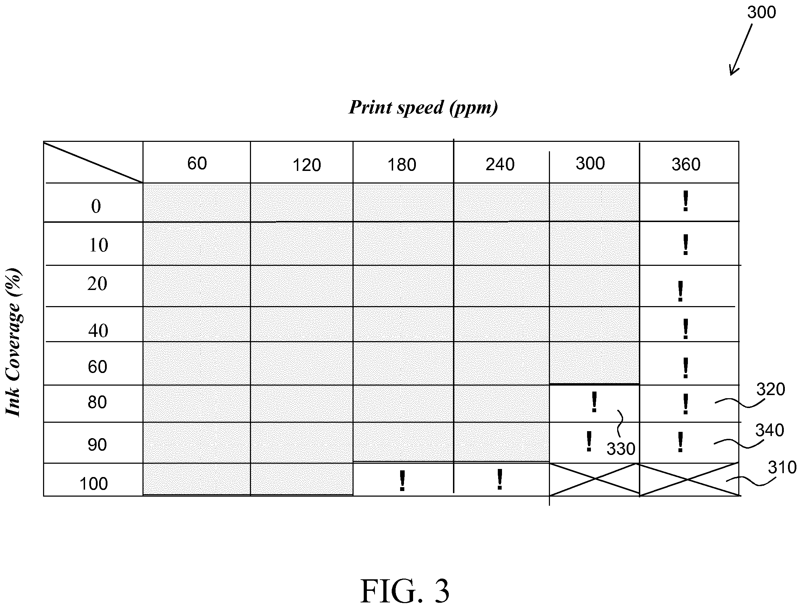

FIG. 3 shows an example of the two-dimensional media print mode table 300 according to the invention. Each cell in the table 300 shows a media print mode based on a combination of print speed and ink coverage. The print speed for the printing system 1 is selected from 60 prints per minute (ppm), 120 ppm, 180 ppm, 240 ppm, etc. The ink coverage is selected from 0%, 10%, 20%, 40%, etc., until 100%. A percentage (%) of ink coverage is an area of the sheet covered by ink divided by a total area of the sheet multiplied by 100. A first percentage value of 0% means that no marking material is deposited on the print medium, i.e. the print medium is just transported along the paper path - whether or not via the duplex loop - without receiving any marking material from the print engine of the printing system. For each cell in the table 300 optimal settings such as Total TAC, Mono TAC, Color Grip, print head height, etc. are determined for different kind of applications.

In a third step S3 iteration occurs over media print modes in the two-dimensional media print mode table for the first print medium which have a conditional suitability.

Each media print mode in the two-dimensional media print mode table comprises an indication item of the suitability corresponding to the uniquely determined combination of print speed and ink coverage. The suitability may be good, bad or conditional. If a media print mode which has a bad suitability, the corresponding cell is provided with a cross symbol 310. If the suitability for a media print mode is conditional, the corresponding cell is provided with an exclamation mark 320. If the suitability is good for the media print mode, the cell may be empty or green coloured for example.

In a fourth step S4 the suitability conditions of the respective media print mode are investigated if they are fulfilled with respect to the print job received in the first step S1. The print job received in the first step S1 may be also called the first print job hereinafter. A suitability condition for a first cell referenced to by reference number 330 in FIG. 3 is for example that the media print mode is good when the number of sheets in the first print job is not larger than 100. This condition is met by the first print job, since according to the print job specifications of the first print job the number of pages is 180 and printing is double sided, e.g. two pages will be printed on one sheet.

It is supposed in this example that another condition for a second cell referenced by the reference number 340 in FIG. 3 is not met by the first print job.

Non-exhaustive examples of conditions are presented here-below.

A condition may be that the print job must contain at least one or some pages with a lower ink coverage. A condition may be that the print job has only page information withing a margin of 10 mm. A condition may be that the print job has a limited number of large pictures. A condition may be that the print job has a run length up to 100. A condition may that additional clean actions have to be carried out.

As soon as the print job enters the print controller 39 of the printing system 1, the print job is analyzed and the print controller knows that the conditions within the respective media print modes for the print medium intended to be used for printing the print job are relevant for the print job. Analysis may be done by a bitmap analyzer taking into account the amount of coloured pixels, the distance of the data information from an edge of a page or sheet, a percentage of areas with a high coverage of ink, a number of almost empty pages, a set length, a run length, etc. A bitmap may be in a format like PDF, PostScript, JPEG, GIF, TIFF, etc. For example, current PDF analyzers analyze a PDF document and detect possible problems, but are not used to optimize the printer system settings or to remove printer limitations.

It is noted that for the printing system 1 it is often also possible to print a high coverage print job for a limited time. So, information about which jobs have been printed before said print job, as well as a current state of the printing system 1 may be used in order to turn the conditional suitability of a media print mode to a good suitability or to a bad suitability. The current state of the printing system 1 may be related to the print jobs printed before since the last cleaning actions, but may also be directly measurable. The user may even be able to turn the conditional suitability of a media print mode into a good suitability by means of a cleaning action.

By doing so, a print job may be printed with a higher print speed than a nominal print speed.

It is noted that settings like a global TAC and mono TAC are intended to limit an amount of ink but for low coverage jobs there is no need for this limitation, because the amount of ink is then limited by the print job itself. Higher TAC values may then be used without consequences for or damage to the printing system 1.

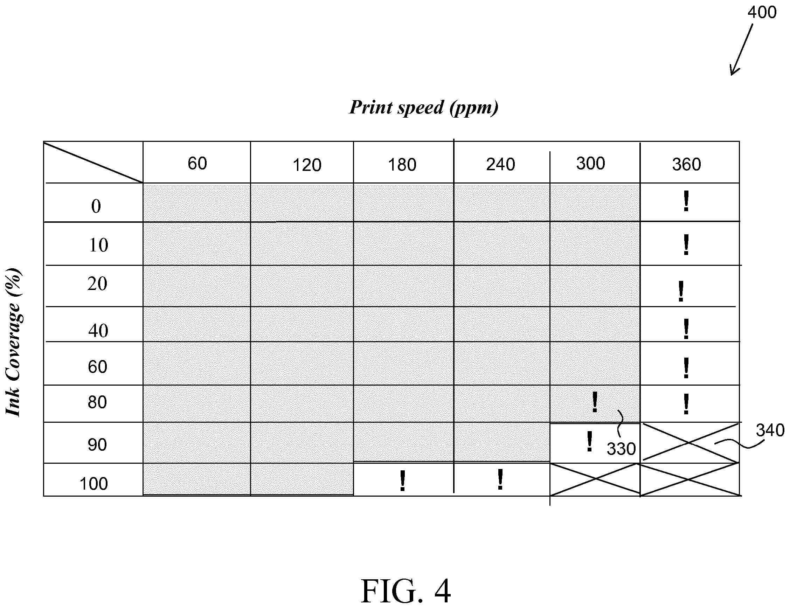

In a fifth step S5 the two-dimensional media print mode table for the first print medium is modified based on the investigation in the fourth step S4. FIG. 4 shows the modified two-dimensional media print mode table 400. The first referenced cell 330 is now coloured green but still contains an exclamation mark. In another embodiment the cell is only coloured green and the exclamation mark is removed from the cell. The second referenced cell 340 is now provided with a cross symbol to indicated that it is not suitable, i.e. not to be used, for the first print job on the first print medium.

According to a further embodiment the media print mode table is further modified by providing cells with an indication item of a conditional suitability - even after the analysis step described here-above in the fourth step S4 - with a bad suitability indication item or by removing those media print modes from the two-dimensional media print mode table. By doing so, only the save media print modes are offered to the user or operator.

In a sixth step S6 the user interface displays the modified two-dimensional media print mode table being suitable for the print job intended to be printed on the first print medium. The user may select all media print modes which are coloured green. According to another embodiment the media print modes which cells are empty are suitable. This may be achieved by removing the exclamation marks from those cells which media print modes are suitable after investigation.

Therefore the user may also select the media print mode referenced to by cell 330 in FIG. 4 for the first print job. According to an embodiment, when activating - by clicking, touching, moving over, etc. - an exclamation mark in a cell the conditions how and when to use or to not use the print medium with the corresponding print speed and corresponding ink coverage may be displayed for example by means of a pop-up window.

The cells provided with a cross symbol like cell 340 may be set to "not selectable". In a user interface screen displayed by means of the user interface 7 of the printing system 1 the two-dimensional media print mode table may be provided without the cells marked with a cross symbol.

Besides displaying the modified two-dimensional media print mode table in a user interface screen on the local user interface 7 of the printing system 1, a user interface screen comprising the modified media print mode table 400 may also be part of tool software installed on an external device like a mobile phone, tablet or computer digitally connected to the network to which the printing system 1 is also connected.

The method ends in end point B.

## Claims

1. Method for profiling a print medium for use in a printing system (1), the printing system configured to print on profiled print media and comprising
- a print controller (39) for controlling print system parameters to be applied when printing on the print medium,
- and a user interface (7),
wherein the method comprises the step of a) receiving a print job for printing on a first print medium,
the method **characterised in that**
- the print controller (39) comprises a two-dimensional media print mode table (300, 400) of media print modes for print media to be printed upon, wherein each media print mode is uniquely determined by a uniquely determined combination of at least a first print system parameter of print speed of the printing system and a second print system parameter of coverage of the marking material and comprises an indication item of a suitability of the print medium when said media print mode is applied, the indication item indicating a good, bad or conditional suitability, and
- the user interface (7) is configured to display the two-dimensional media print mode table (300, 400) for a print medium,
wherein the method comprises the further steps of
b) retrieving (S2) the two-dimensional media print mode table (300, 400) for the first print medium,
c) investigating (S4) if media print modes in the two-dimensional media print mode table (300, 400) for the first print medium which have a conditional suitability are suitable for printing the print job,
d) modifying (S5) the two-dimensional media print mode table (300, 400) for the first print medium based on the investigation in step c), and
e) the user interface (7) displaying (S6) the modified two-dimensional media print mode table (300, 400) for the print medium.

2. Method according to claim 1, wherein the step of modifying the two-dimensional media print mode table for the first print medium comprises the step of replacing an indication item in the two-dimensional media print mode table which indicates a conditional suitability by a modified indication item which indicates a good or
bad suitability according to the investigation in step c).

3. Method according to any of the preceding claims, wherein the step of modifying the two-dimensional media print mode table for the first print medium comprises the step of leaving out a media print mode from the two-dimensional media print mode table for the print medium when the indication item indicates a bad suitability result for the print job.

4. Method according to any of the preceding claims, wherein the step of the user interface displaying the modified two-dimensional media print mode table for the print medium comprises the sub-step of reducing the media print modes intended to be displayed to a predefined limited set of preferred media print modes.

5. Method according to any of the preceding claims, wherein the method comprises the step of replacing an indication item in the two-dimensional media print mode table which indicates a good or conditional suitability by a modified indication item which indicates a bad suitability according to the authority of the operator or owner of the print job.

6. Printing system (1) configured to profile print media and comprising
- a print controller (39) for controlling print system parameters to be applied when printing a print job on the print medium, and
- a user interface (7),
the printing system (1) **characterised in that**
the print controller (39) comprises in storage a two-dimensional media print mode table (300, 400) of media print modes for print media to be printed upon, wherein each media print mode is uniquely determined by a uniquely determined combination of at least a first print system parameter of print speed of the printing system and a second print system parameter of coverage of the marking material and comprises an indication item of a suitability of the print medium when said media print mode is applied, the indication item indicating a good, bad or conditional suitability, and
- the user interface (7) is configured to display the two-dimensional media print mode table (300, 400) for a print medium,
wherein the print controller (39) is configured to execute the method according to any of the claims 1 - 5.

7. Non-transitory recording medium comprising computer executable program code configured to instruct a computer to perform a method according to any of the claims 1-5 in a printing system according to claim 6.

## Patentansprüche

1. Ein Verfahren zum Profilieren eines Druckmediums für den Gebrauch in einem Druckersystem (1), das dazu konfiguriert ist, auf profilierte Druckmedien zu drucken, und das aufweist:
- ein Druckersteuersystem (39) zum Steuern von Drucksystemparametern, die anzuwenden sind, wenn auf das Druckmedium gedruckt wird,
- und eine Benutzerschnittstelle (7),
wobei das Verfahren den Schritt a) des Empfangs eines Druckauftrags für das Drucken auf ein erstes Druckmedium umfasst,
wobei das Verfahren **dadurch gekennzeichnet ist, dass**
- das Druckersteuersystem (39) eine zweidimensionale Mediendruckmodustabelle (300, 400) für Mediendruckmodi für Druckmedien, auf die gedruckt werden soll, wobei jeder Mediendruckmodus eindeutig bestimmt ist durch eine eindeutig bestimmte Kombination aus wenigstens einem ersten Drucksystemparameter einer Druckgeschwindigkeit des Drucksystems und wenigstens einem zweiten Drucksystemparameter einer Bedeckung mit Markierungsmaterial, und ein Anzeigeelement für eine Eignung des Druckmediums aufweist, wenn dieser Mediendruckmodus angewandt wird, wobei das Anzeigeelement eine gute, schlechte oder bedingte Eignung anzeigt, und
- die Benutzerschnittstelle (7) dazu konfiguriert ist, die zweidimensionale Mediendruckmodustabelle (300, 400) für ein Druckmedium anzuzeigen,
wobei das Verfahren die folgenden weiteren Schritte umfasst:
b) Abrufen (S2) der zweidimensionalen Mediendruckmodustabelle (300, 400) für das erste Druckmedium,
c) Untersuchen (S4), ob Mediendruckmodi in der zweidimensionalen Mediendruckmodustabelle (300, 400) für das erste Druckmedium, die eine bedingte Eignung haben, für das Drucken des Druckauftrags geeignet sind,
d) Modifizieren (S5) der zweidimensionalen Mediendruckmodustabelle (300, 400) für das erste Druckmedium auf der Grundlage der Untersuchung in Schritt c), und
e) Anzeigen (S6) der modifizierten zweidimensionalen Mediendruckmodustabelle (300, 400) für das Druckmedium auf der Benutzerschnittstelle (7).

2. Das Verfahren nach Anspruch 1, bei dem der Schritt des Modifizierens der zweidimensionalen Mediendruckmodustabelle für das erste Druckmedium einen Schritt des Ersetzens eines Anzeigeelements in der zweidimensionalen Mediendruckmodustabelle, das eine bedingte Eignung anzeigt, durch ein modifiziertes Anzeigeelement, das eine gute oder schlechte Eignung , gemäß der Untersuchung in Schritt c). anzeigt, einschließt.

3. Das Verfahren nach einem der vorstehenden Ansprüche, bei dem der Schritt des Modifizierens der zweidimensionalen Mediendruckmodustabelle für das erste Druckmedium den Schritt des Auslassens eines Mediendruckmodus aus der zweidimensionalen Mediendruckmodustabelle für das Druckmedium einschließt, wenn das Anzeigeelement als Resultat eine schlechte Eignung für den Druckauftrag anzeigt.

4. Das Verfahren nach einem der vorstehenden Ansprüche, bei dem der Schritt der Anzeige der modifizierten zweidimensionalen Mediendruckmodustabelle für das Druckmedium auf der Benutzerschnittstelle den Teilschritt der Reduktion der Mediendruckmodi, die zur Anzeige vorgesehen sind, auf einen vordefinierten begrenzten Satz von bevorzugten Mediendruckmodi einschließt.

5. Das Verfahren nach einem der vorstehenden Ansprüche, bei dem das Verfahren einen Schritt der Ersetzung eines Anzeigeelements in der zweidimensionalen Mediendruckmodustabelle, das eine gute oder bedingte Eignung anzeigt, durch ein modifiziertes Anzeigeelement, das eine schlechte Eignung anzeigt, gemäß der Autorität des Bedieners oder Eigentümers des Druckauftrags einschließt.

6. Druckersystem (1), das dazu konfiguriert ist, Druckmedien zu profilieren, und das aufweist:
- ein Druckersteuersystem (39) zum Steuern von Drucksystemparametern, die anzuwenden sind, wenn ein Druckauftrag auf das Druckmedium gedruckt wird, und
- eine Benutzerschnittstelle (7),
wobei das Druckersystem (1) **dadurch gekennzeichnet ist, dass**
das Druckersteuersystem (39) im Speicher eine zweidimensionale Mediendruckmodustabelle (300, 400) von Mediendruckmodi für Druckmedien, auf die gedruckt werden soll, wobei jeder Mediendruckmodus eindeutig bestimmt ist durch eine eindeutig bestimmte Kombination aus zumindest einem ersten Drucksystemparameter einer Druckgeschwindigkeit des Druckersystems und einem zweiten Drucksystemparameter einer Bedeckung mit Markierungsmaterial und ein Anzeigeelement für eine Eignung des Druckmediums enthält, wenn dieser Mediendruckmodus angewandt wird, wobei das Anzeigeelement eine gute, schlechte oder bedingte Eignung anzeigt, und
- die Benutzerschnittstelle (7) dazu konfiguriert ist, die zweidimensionale Mediendruckmodustabelle (300, 400) für ein Druckmedium anzuzeigen,
wobei das Druckersteuersystem (39) dazu konfiguriert ist, das Verfahren nach einem der Ansprüche 1 bis 5 auszuführen.

7. Nichtflüchtiges Speichermedium mit von einem Computer ausführbarem Programmcode, der dazu konfiguriert ist, einen Computer anzuweisen, ein Verfahren nach einem der Ansprüche 1 bis 5 in einem Druckersystem gemäß Anspruch 6 auszuführen.

## Revendications

1. Procédé de profilage d'un support d'impression destiné à être utilisé dans un système d'impression (1), le système d'impression configuré pour imprimer sur des supports d'impression profilés et comprenant
- un dispositif de commande d'impression (39) pour commander des paramètres de système d'impression à appliquer lors de l'impression sur le support d'impression,
- et une interface utilisateur (7),
dans lequel le procédé comprend l'étape consistant à : a) recevoir une tâche d'impression pour imprimer sur un premier support d'impression,
le procédé étant **caractérisé en ce que**
- le dispositif de commande d'impression (39) comprend un tableau de mode d'impression de supports bidimensionnel (300, 400) de modes d'impression de supports pour des supports d'impression à imprimer, dans lequel chaque mode d'impression de support est déterminé de manière unique par une combinaison déterminée de manière unique d'au moins un premier paramètre de système d'impression de vitesse d'impression du système d'impression et d'un second paramètre de système d'impression de couverture du matériau de marquage et comprend un élément d'indication d'une aptitude du support d'impression lorsque ledit mode d'impression de support est appliqué, l'élément d'indication indiquant une aptitude bonne, mauvaise ou conditionnelle, et
- l'interface utilisateur (7) est configurée pour afficher le tableau de mode d'impression de supports bidimensionnel (300, 400) pour un support d'impression,
dans lequel le procédé comprend les étapes supplémentaires consistant à
b) récupérer (S2) le tableau de mode d'impression de supports bidimensionnel (300, 400) pour le premier support d'impression,
c) examiner (S4) si des modes d'impression de support dans le tableau de mode d'impression de supports bidimensionnel (300, 400) pour le premier support d'impression qui présentent une aptitude conditionnelle sont appropriés pour imprimer le travail d'impression,
d) modifier (S5) le tableau de mode d'impression de supports bidimensionnel (300, 400) pour le premier support d'impression sur la base de l'enquête à l'étape c), et
e) l'interface utilisateur (7) affichant (S6) le tableau de mode d'impression de supports bidimensionnel (300, 400) modifié pour le support d'impression.

2. Procédé selon la revendication 1, dans lequel l'étape de modification du tableau de mode d'impression de supports bidimensionnel pour le premier support d'impression comprend l'étape de remplacement d'un élément d'indication dans le tableau de mode d'impression de supports bidimensionnel qui indique une aptitude conditionnelle par un élément d'indication modifié qui indique une bonne ou une mauvaise aptitude selon l'enquête à l'étape c).

3. Procédé selon l'une quelconque des revendications précédentes, dans lequel l'étape de modification du tableau de mode d'impression de supports bidimensionnel pour le premier support d'impression comprend l'étape de retrait d'un mode d'impression de support du tableau de mode d'impression de supports bidimensionnel pour le support d'impression lorsque l'élément d'indication indique un résultat de mauvaise adéquation pour la tâche d'impression.

4. Procédé selon l'une quelconque des revendications précédentes, dans lequel l'étape d'affichage par l'interface utilisateur du tableau de mode d'impression de supports bidimensionnel modifié pour le support d'impression comprend la sous-étape de réduction des modes d'impression de support destinés à être affichés à un ensemble limité prédéfini de modes d'impression de support préférés.

5. Procédé selon l'une quelconque des revendications précédentes, dans lequel le procédé comprend l'étape consistant à remplacer un élément d'indication dans le tableau de mode d'impression de supports bidimensionnel qui indique une bonne aptitude ou une aptitude conditionnelle par un élément d'indication modifié qui indique une mauvaise aptitude selon l'autorité de l'opérateur ou du propriétaire de la tâche d'impression.

6. Système d'impression (1) configuré pour profiler des supports d'impression et comprenant
- un dispositif de commande d'impression (39) pour commander des paramètres de système d'impression à appliquer lors de l'impression d'une tâche d'impression sur le support d'impression, et
- une interface utilisateur (7),
le système d'impression (1) **caractérisé en ce que**
- le dispositif de commande d'impression (39) comprend en mémoire un tableau de mode d'impression de supports bidimensionnel (300, 400) de modes d'impression de supports pour des supports d'impression à imprimer, dans lequel chaque mode d'impression de support est déterminé de manière unique par une combinaison déterminée de manière unique d'au moins un premier paramètre de système d'impression de vitesse d'impression du système d'impression et d'un second paramètre de système d'impression de couverture du matériau de marquage et comprend un élément d'indication d'une aptitude du support d'impression lorsque ledit mode d'impression de support est appliqué, l'élément d'indication indiquant une aptitude bonne, mauvaise ou conditionnelle, et
- l'interface utilisateur (7) est configurée pour afficher le tableau de mode d'impression de supports bidimensionnel (300, 400) pour un support d'impression,
dans lequel le dispositif de commande d'impression (39) est configuré pour exécuter le procédé selon l'une quelconque des revendications 1-5.

7. Support d'enregistrement non transitoire comprenant un code de programme exécutable par ordinateur configuré pour ordonner à un ordinateur d'exécuter un procédé selon l'une quelconque des revendications 1-5 dans un système d'impression selon la revendication 6.
